# FASCICULE DE BREVET EUROPEEN

(11) **EP 2 342 452 B1**
(45) Date de publication et mention de la délivrance du brevet: **10.10.2012**
(21) Numéro de dépôt: 09783998.9
(22) Date de dépôt: 14.10.2009
(51) Int. Cl.: F03D 1/00, F03D 11/00, F03D 11/04, F03D 1/06

(54) **DISPOSITIF ET PROCÉDÉ D'ASSEMBLAGE DE PALES D'ÉOLIENNES**
VORRICHTUNG UND VERFAHREN ZUR MONTAGE VON WINDTURBINEN-ROTORBLÄTTER
DEVICE AND METHOD FOR ASSEMBLING WINDTURBINE BLADES

(30) Priorité: 23.10.2008 FR 0857210
(43) Date de publication de la demande: 13.07.2011
(73) Titulaire: Astrium SAS, 75116 Paris (FR)
(72) Inventeur: LEMAIRE, Frédéric, F-33400 Talence (FR); RAYMOND, Gérald, F-33160 Saint Medard En Jalles (FR)
(74) Mandataire: Maupilier, Didier
(86) Numéro de dépôt international: PCT/EP2009/063384
(87) Numéro de publication internationale: WO 2010/046288

(56) Documents cités:
- EP-A- 1 878 915
- EP-A- 1 974 995
- WO-A-2006/061806

## Description

La présente invention concerne un dispositif d'assemblage et un procédé d'assemblage de pales d'éoliennes.

Elle concerne plus particulièrement les pales d'éoliennes et les éoliennes de grandes dimensions.

Le secteur de la génération d'énergie électrique par le moyen d'éoliennes est en croissance rapide. La recherche des économies d'échelle et l'intérêt de capter le vent à des hauteurs les plus grandes possible conduisent à la conception de machines de plus en plus grandes.

Les pales d'éoliennes atteignent actuellement des dimensions supérieures à 50m et des prototypes de plus de 75 m sont en construction. Ces pales sont l'objet de nombreuses contraintes qui conduisent à les réaliser en matériaux composites, seule façon de concilier leur résistance et la maîtrise de leur masse.

Si la fabrication en usine de pales de telles dimensions pose des problèmes difficiles mais surmontables, leur transport vers des sites souvent éloignés des grands axes routiers se révèle souvent critique et onéreux.

Les constructeurs d'éoliennes ont donc été conduits à réaliser des pales en plusieurs morceaux, assemblée sur place après transport. L'assemblage sur place se fait soit au sol, avec des outillages de type berceaux, soit en pendulaire.

Dans les deux cas, la taille des segments de pales rend l'opération délicate, compte tenu de la relative fragilité des pièces qui sont optimisées en masse, de la qualité demandée à l'assemblage en termes de précision demandée et de la qualité finale de la pale qui devra résister durant la vie de l'installation aux multiples contraintes de fatigue et d'environnement.

On retiendra que divers procédés d'assemblage purement mécaniques ont été proposés et notamment les documents EP 1 584 817 A1, EP 1 878 915 A2, US2008/0069699A1 proposent diverses solutions pour réaliser la jonction de tronçons de pales séparés.

On notera qu'assembler de tels tronçons de pales reste une opération délicate, du fait du positionnement précis qu'il faut obtenir sur le site où sera utilisée l'éolienne.

La présente invention a pour but de proposer un dispositif d'assemblage, une pale adaptée et un procédé de transport et d'assemblage de pales d'éoliennes à partir de tronçons et prévoit pour ce faire un dispositif d'assemblage de tronçons de pales d'éoliennes caractérisé en ce qu'il comprend au moins une charnière amovible de raccordement d'au moins deux desdits tronçons et adaptée à replier l'un desdits tronçons sur l'autre en vue du transport de la pale et à déplier les tronçons en alignement.

La charnière amovible comprend avantageusement des bras, de fixation de la charnière sur lesdits tronçons, disposés de part et d'autre d'un axe de la charnière.

Selon un mode de réalisation particulier, les extrémités libres des bras sont terminés par des plaques de fixation sur les tronçons.

Le dispositif comporte préférablement des trous de passage de moyens de fixation, traversant la peau des tronçons du côté de la pale recevant la charnière pour fixer les bras des charnières amovibles.

Pour la fixation des charnières, selon un premier mode de réalisation, le dispositif comporte, à l'intérieur de la pale, des contre plaques de serrage desdits moyens de fixation.

Selon un mode de réalisation alternatif, le dispositif comporte des inserts de serrage des moyens de fixation fixés sur la face interne de longerons de la pale.

L'invention concerne en outre une pale d'éolienne comprenant au moins deux tronçons adaptés à recevoir un dispositif d'assemblage selon l'invention telle que les tronçons comportent des moyens de solidarisation des tronçons, tronçons dépliés en alignement et des zones de réception du dispositif d'assemblage.

Les tronçons comportant des longerons, les moyens de solidarisation des tronçons comportent avantageusement des trous dans des parties de cornières terminant des longerons des tronçons et des moyens de serrage tels que des boulons de traction.

Avantageusement, des ouvertures d'accès sont ménagées dans la peau de la pale en sorte de disposer les boulons dans les trous des cornières en vis a vis et de serrer les vis et les écrous constituant les boulons pour appliquer les cornières l'une contre l'autre et ainsi solidariser les tronçons.

Dans ce cas, les longerons se terminent préférablement par une zone de section réduite recevant les cornières.

Avantageusement, les tronçons comportant des longerons, les moyens de solidarisation comprennent des moyens de fixation des tronçons directement sur les longerons.

Les moyens de fixation des tronçons sont notamment réalisés par des plaques disposées sur des faces externes des longerons et des vis traversant les plaques et les longerons.

Ils comportent préférablement des inserts taraudés ou des contre plaques munies de trous taraudés solidaires des longerons pour fixer les plaques au moyen des vis.

Selon un mode de réalisation alternatif, la fixation des tronçons entre eux est réalisée par collage.

Les tronçons comportent avantageusement dans ce cas des longerons dont les faces latérales se terminent par des lames adaptées à être prises en sandwich par des premières plaques collées pour la reprise des efforts de cisaillements subis par la pale.

Selon un mode de réalisation particulier de l'invention, en sorte de réaliser un capotage et en sorte de reprendre les efforts principaux que subit la pale, les peaux supérieure et inférieure des tronçons comportent des ouvertures laissant accessible les terminaison des faces supérieure et inférieure des longerons et des secondes plaques sont collées sur ces terminaisons.

L'invention concerne en outre un procédé de réalisation de pale d'éolienne caractérisé en ce qu'on fabrique des tronçons de pale, on aligne lesdits tronçons longitudinalement dans leur position finale, on les assemble au moyen d'au moins un dispositif d'assemblage selon l'invention, on replie les tronçons les uns sur les autres en vue de leur transport, on déplie les tronçons sur le site d'installation de l'éolienne recevant ladite pale, on fixe les tronçons ensembles pour monter la pale et on retire ledit au moins un dispositif d'assemblage.

Selon un premier mode de réalisation, on fabrique les tronçons dans un même moule.

Selon un mode de réalisation alternatif, on fabrique les tronçons dans des moules différents.

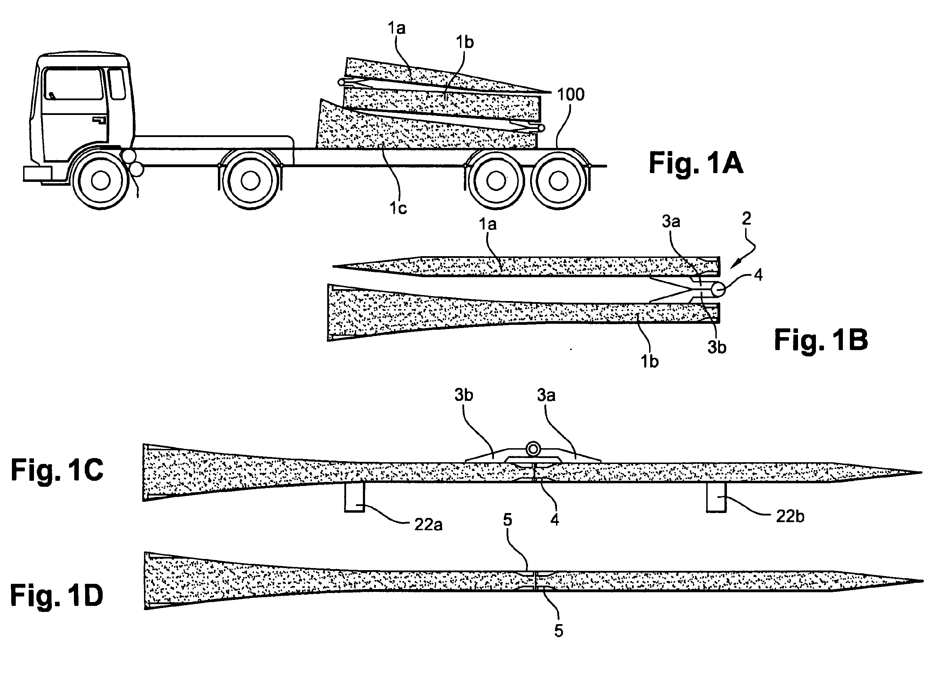

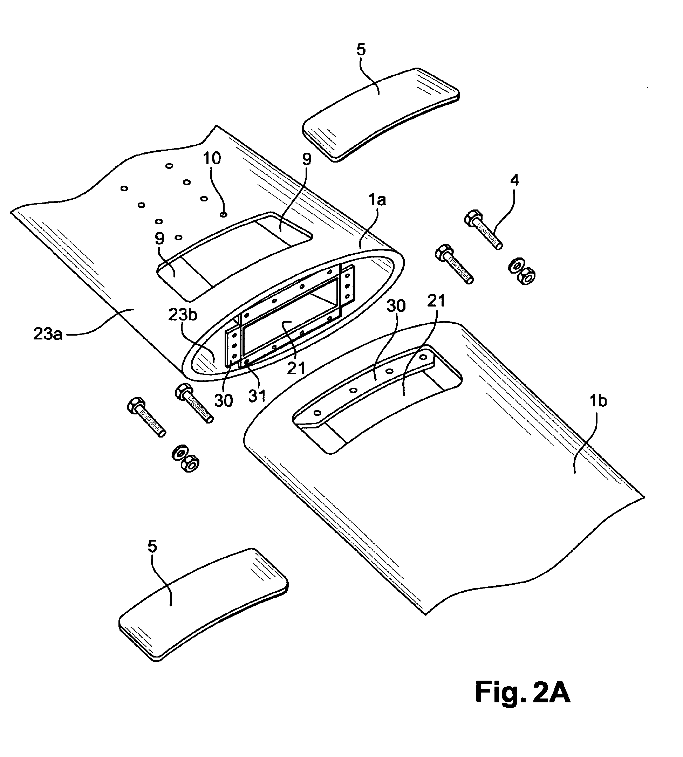

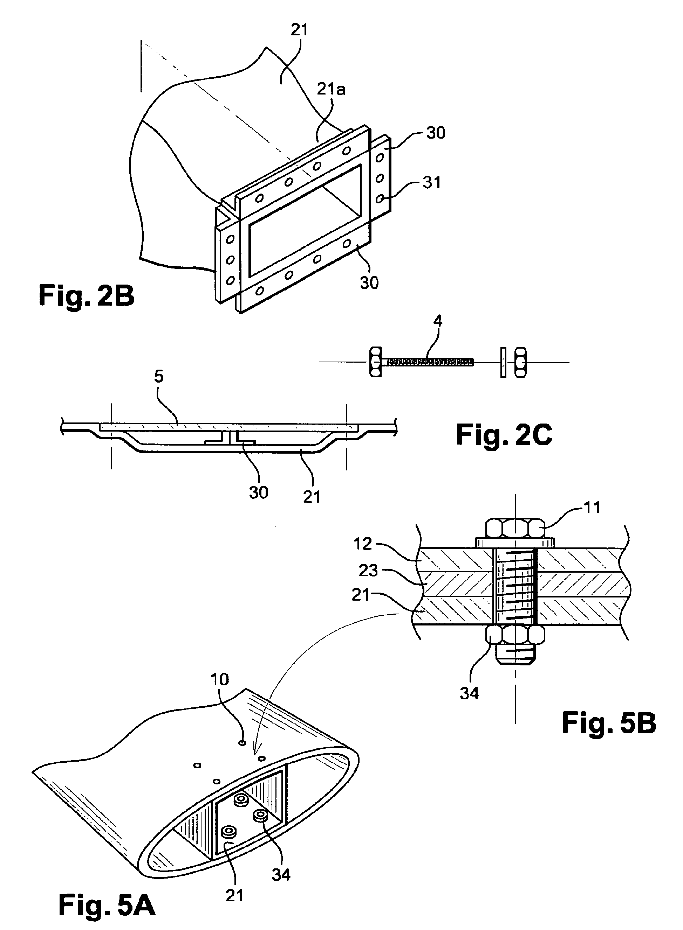

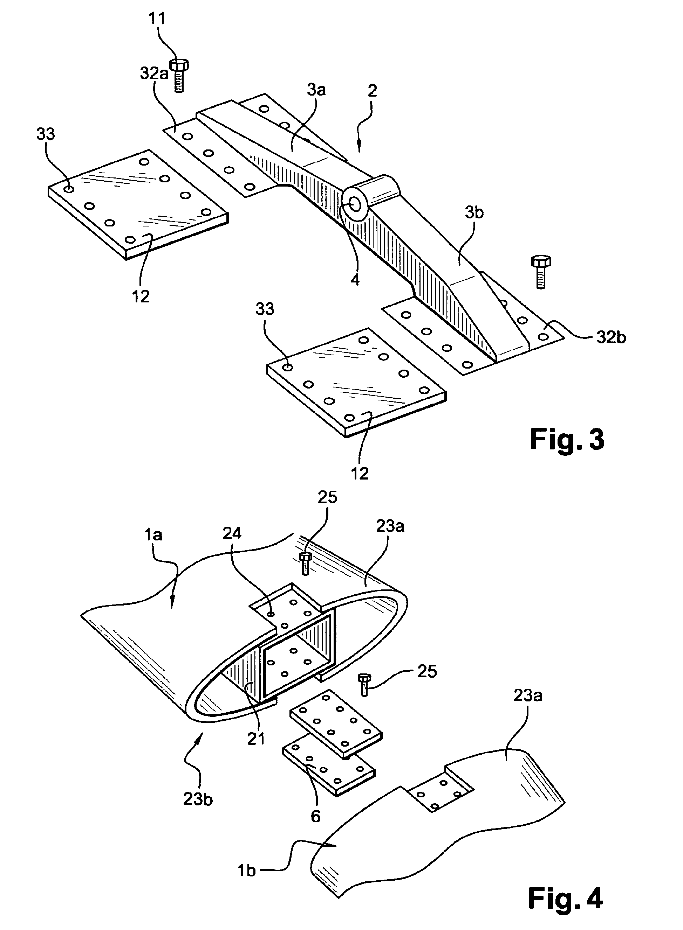

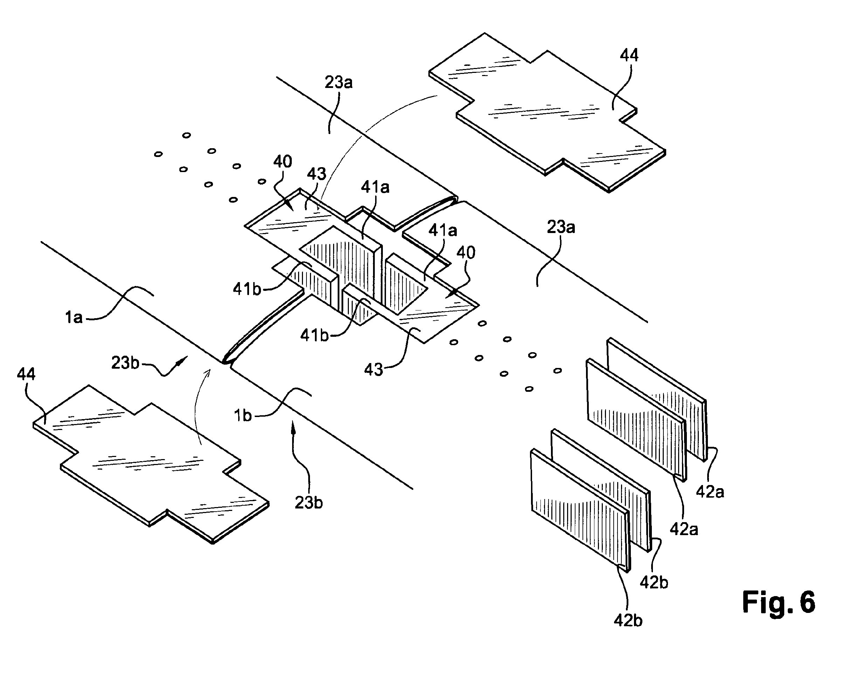

D'autres caractéristiques et avantages de l'invention seront mieux compris à la lecture de la description qui suit d'exemples de réalisation de l'invention non limitatifs en référence aux dessins qui représentent:
aux figures 1A à 1D: des vues de côté d'un premier exemple de réalisation d'un assemblage de tronçons de pale selon l'invention respectivement en position pliée sur véhicule de transport, en agrandissement de deux tronçons en position pliée, en position dépliée en cours de fixation, en position dépliée fixation terminée;
en figure 2A: une vue en perspective éclaté d'un premier exemple d'assemblage de l'invention;
aux figures 2B et 2C: des détails de construction de l'exemple de la figure 2A;
en figure 3: une vue en perspective d'un premier exemple de charnière d'assemblage de tronçons de pale selon l'invention;
en figure 4: une vue en perspective d'un second exemple d'assemblage de l'invention;
en figure 5A: une vue en coupe d'un moyen de fixation de charnière à insert;
en figure 5B: un tronçon de pale équipé de l'insert de la figure 5A;
en figure 6: une vue en perspective d'un troisième exemple d'assemblage selon l'invention.

Les figures 1A à 1D montrent une vue de côté d'un segment de pale d'éolienne selon l'invention. Selon la figure 1A la pale comprend trois tronçons 1a, 1b, 1c qui sont repliés en accordéon les uns sur les autres sur un véhicule de transport 100. La figure 1B représente en agrandissement deux des tronçons 1a, 1b raccordés par un premier exemple de réalisation de charnière amovible 2 adaptée à replier l'un desdits tronçons sur l'autre en vue du transport de la pale et à déplier les tronçons en alignement.

Selon cet exemple préférentiel, la charnière amovible 2 comporte deux bras 3a, 3b de part et d'autre d'un axe de rotation 4.

La charnière amovible 2 est dans le cas de la figure 1B en position fermée qui permet de replier les tronçons 1 a et 1 b l'un sur l'autre.

En figure 1C, la charnière amovible 2 est en position ouverte et les tronçons 1 a et 1 b sont bout à bout en alignement pour permettre leur fixation.

En figure 1D, la charnière amovible 2 est retirée et la pale est terminée par l'ajout de capots 5 pour masquer les zones de fixation des tronçons ensemble.

Pour réaliser les pales de l'invention, on fabrique des tronçons 1 a, 1b, 1 c par des techniques connues de réalisation de profils composites tels que le drapage ou le moulage.

Ensuite, une fois que les tronçons sont réalisés, on aligne les tronçons longitudinalement dans leur position finale et on les assemble au moyen de la charnière amovible en réglant la position de la charnière ouverte de sorte que les tronçons soient correctement alignés.

La pale est ainsi réalisée en plusieurs tronçon en usine, ce qui limite la taille des outillages, notamment des moules qui atteignent des dimensions prohibitives dans le cas des pales monobloc.

Une fois les tronçons de pale alignés, la ou les charnières sont refermées et la pale est repliée pour transport.

Le transport de la pale se fait pale repliée comme représenté en figure 1A, les tronçons étant disposés l'un sur l'autre ce qui permet d'utiliser un camion de longueur raisonnable.

L'exemple de la figure 1A représente une pale à trois tronçons et l'invention s'applique à une pale comportant plus de deux tronçons en disposant une charnière entre deux tronçons successifs.

La masse de la pale étant modeste eu égard à sa taille (18 tonnes environ pour une pale de 60 m), son transport demeure aisé.

Une fois sur le site d'installation de l'éolienne recevant la pale, on déplie les tronçons en ouvrant les charnières 2 comme représenté en figure 1C et on fixe les tronçons ensembles pour monter la pale.

Les tronçons dépliés sont disposés comme représenté sur de simples berceaux où éléments de bâti support 22a, 22b et dépliés puis assemblés à l'aide des moyens de fixation 4.

Enfin comme représenté en figure 1D, on recouvre les zones de fixation avec des capots 5 si nécessaire et on retire les charnières amovibles.

Ainsi, une fois sur place, la pale est déposée sur les berceaux et dépliée à l'aide d'une grue de montage de l'éolienne. La position relative des segments est contrôlé par la géométrie des charnières, et donc très précise.

La fixation finale des segments est assurée par des éléments mécaniques comme les boulons de traction 4, des plaques 6 ou par collage structural.

La figure 2A illustre une solution pour la fixation des tronçons utilisant des boulons de traction et pour laquelle les efforts transitent par un longeron 21 interne aux tronçons.

Ce longeron 21, fabriqué séparément, soit en monobloc, soit par collage de deux « oméga » est rapporté dans le moule de forme qui permet de réaliser la peau 23a, 23b des tronçons de la pale.

Ce longeron a pour fonction d'apporter sa rigidité longitudinale à la pale. Il est par exemple fabriqué par infusion en fibre de verre et résine époxy comme les peaux de la pale, mais peut contenir une proportion de fibre de carbone, dans un souci d'allègement.

Le longeron est de section carrée ou rectangulaire, comporte une face supérieure et une face inférieure sous les faces profilées de la pale et des face latérales dans l'alignement des bords d'attaque et de fuite de la pale.

Les peaux supérieure et inférieure 23a, 23b du tronçon et le longeron 21 sont ensuite assemblés par collage structural au niveau du bord d'attaque et du bord de fuite et du longeron.

Un exemple de terminaison des longerons internes adaptée à l'exemple de la figure 2A est représentée en détail à la figure 2B.

Les longerons internes se terminent par une zone de section réduite 21 a sur laquelle sont fixées des cornières 30 percées de trous 31 de sorte que les moyens de fixation des tronçons ne dépasse pas du profil de la pale.

De retour à la figure 2A, des ouvertures d'accès 9 dans la peau de la pale permettent de disposer des moyens de serrage tels que des boulons 4 dans les trous 31 des cornières en vis a vis et de serrer les vis et les écrous les constituant pour appliquer les cornières 30 l'une contre l'autre et ainsi solidariser les tronçons.

Dans cet exemple, les tronçons comportent des seconds trous 10 traversant la peau d'un côté du tronçon de la pale recevant la charnière pour fixer les bras 3a, 3b des charnières amovibles 2 comme il sera vu plus loin.

Une fois les boulons 4 serrés, des capots 5 referment les ouvertures d'accès 9 pour que la pale ait un profil lisse et éviter les perturbations aérodynamiques.

La figure 3 illustre une charnière amovible adaptée à se fixer sur les tronçons de la figure 2A.

La charnière comporte deux bras 3a, 3b qui s'étendent de part et d'autre d'un axe 4 et dont les extrémités libres se terminent par des plaques de fixation 32a, 32b.

Pour la fixation des charnières sur le tronçon, la figure 3 prévoit des contre plaques 12 pourvues de trous taraudés 33 et se fixant à l'intérieur du longeron 21, en regard de la zone de fixation de la charnière, de sorte que les plaques de fixation 32a, 32b puissent être boulonnées à l'aide de vis 11 sur les contre plaques au travers des trous 10 réalisés dans la peau et les longerons des tronçons en sorte de prendre la peau et les longerons en sandwich entre les plaques de fixation des charnières et les contre-plaques.

Une variante de fixation des charnières est représentée aux figures 5A et 5B pour lesquelles les contre plaques sont remplacées par des inserts fixés sur la face interne des longerons 21.

La figure 5A représente une coupe du tronçon de pale dans la zone de réception d'une plaque de fixation de la charnière qui permet de voir sur la face supérieure du tronçon une partie des trous 10 de réception des vis 11 de fixation de la charnière et, sur la face inférieure interne du longeron 21 en regard de la zone de réception de la charnière, les inserts 34 en position solidement fixés dans le longeron.

La figure 5B représente une zone de réception d'une vis 11 en coupe et représente de haut en bas la vis 11, la plaque de fixation 12 de la charnière, la peau du tronçon 23, le longeron 21 et l'insert taraudé 34 dans lequel vient se visser la vis 11 constituant un moyen de fixation.

D'autres moyens de fixation et de serrage comme des rivets peuvent être envisagés en remplacement des vis tout en restant dans le cadre de l'invention.

Une variante d'assemblage des tronçons est représentée à la figure 4.

Cette figure correspond en particulier à un mode de réalisation des tronçons 1a, 1 b pour lequel un longeron (aussi appelé "spar" selon la terminologie anglo-saxonne) 21 est utilisé et où la fixation se fait directement sur le longeron sans cornières terminales.

Dans un tel cas, les moyens de fixation des tronçons sont selon l'exemple réalisés par des trous 24 dans le longeron, des plaques 6 et des vis 25 traversant les plaques et les longerons.

Il est possible dans ce cas d'utiliser là encore des inserts tels que décrits à la figure 5B pour fixer les plaques 6 de la même façon que les plaques de fixation de la charnière ou d'utiliser des contre plaques pourvues de trous taraudés comme représenté à la figure 3.

La figure 6 représente une variante de la fixation des tronçons par collage.

Selon cet exemple, les faces latérales des longerons 40 se terminent par des lames 41 a, 41 b qui vont être prises en sandwich par des premières plaques collées 42a, 42b pour la reprise des efforts de cisaillements subis par la pale.

Des ouvertures réalisées dans les peaux supérieure 23a et inférieure 23b des tronçons laissent accessible les terminaison des faces supérieure 43 et inférieure des longerons 40 et des secondes plaques 44 sont collées sur ces terminaisons pour réaliser un capotage et reprendre les efforts principaux que subit la pale.

La découpe des peaux de la pale permet de dégager un espace libre autour de la zone de réception des premières plaques 42a, 42b pour permettre leur collage et la découpe des secondes plaques est adaptée pour refermer cet espace.

Il est possible de fabriquer les tronçons dans un même moule ce qui simplifie la procédure d'alignement des tronçons ou de fabriquer les tronçons dans des moules différents ce qui procure un gain de place.

Du fait de l'invention, la fabrication industrielle de la pale est également facilitée par le fait que les rebuts dus à défauts ne portent plus que sur des tronçons de pales mais plus sur des pales entières.

En outre, les opérations sur le site d'exploitation de l'éolienne sont réduites et les différents éléments de la pale sont réglés en usine, la pale étant transportée pliée, puis dépliée sur site.

La réalisation décrite correspond à une pale de l'ordre de 60m constituée classiquement de deux peaux aérodynamiques, réalisées séparément par infusion sous vide en fibre de verre et résine époxy. La masse de la pale est de l'ordre de 18 tonnes.

La réalisation des tronçons en plusieurs moules séparés permet une optimisation de la production en terme de flux et de gestion des non conformités.

Les moyens de fixation des tronçons peuvent être intégrés sur chacun des éléments par comoulage, collage ou assemblage mécanique. Les moules peuvent être utilisés comme banc de réglage des segments de pale lors du raccordement des charnières, ou le réglage peut être fait sur un banc spécifique, afin de libérer plus rapidement les moules.

Cette solution comporte toutefois une difficulté: l'obtention d'une continuité de profil aérodynamique entre les différents éléments.

Bien que moins souple en production une solution est de réaliser la pale avec un seul moule, cette solution permet de contourner les problèmes de continuité de profil.

On peut réaliser dans ce cas les tronçons ou segments de pale dans un même moule en les séparant par des films, ou réaliser une pale complète et la couper aux endroits désirés après réalisation.

Le positionnement des charnières amovibles en usine permet dans tous les cas d'éviter un réglage relatif des positions des éléments de pale sur le site d'assemblage.

## Revendications

1. Dispositif d'assemblage de tronçons de pales d'éoliennes **caractérisé en ce qu'**il comprend au moins une charnière amovible (2) de raccordement d'au moins deux desdits tronçons et adaptée à replier l'un desdits tronçons sur l'autre en vue du transport de la pale et à déplier les tronçons en alignement.

2. Dispositif d'assemblage de tronçons de pales d'éoliennes selon la revendication 1 pour lequel la charnière amovible (2) comprend des bras (3a, 3b), de fixation de la charnière sur lesdits tronçons, disposés de part et d'autre d'un axe (4) de la charnière.

3. Dispositif d'assemblage de tronçons de pales d'éoliennes selon la revendication 2 **caractérisé en ce que** les extrémités libres des bras (3a, 3b) sont terminés par des plaques (32a, 32b) de fixation sur les tronçons.

4. Dispositif d'assemblage de tronçons de pales d'éoliennes selon la revendication 2 ou 3 **caractérisé en ce qu'**il comporte des trous (10) de passage de moyens de fixation (11), traversant la peau des tronçons du côté de la pale recevant la charnière pour fixer les bras (3a, 3b) des charnières amovibles (2).

5. Dispositif d'assemblage de tronçons de pales d'éoliennes selon la revendication 4 **caractérisé en ce qu'**il comporte, à l'intérieur de la pale, des contre plaques (12) de serrage desdits moyens de fixation (11).

6. Dispositif d'assemblage de tronçons de pales d'éoliennes selon la revendication 4 **caractérisé en ce qu'**il comporte des inserts (34) de serrage des moyens de fixation (11) fixés sur la face interne de longerons (21) de la pale.

7. Pale d'éolienne comprenant au moins deux tronçons adaptés à recevoir un dispositif d'assemblage selon l'une des revendications précédentes **caractérisé en ce que** les tronçons comportent des moyens (4, 6, 25, 31, 42a, 42b, 44) de solidarisation des tronçons, tronçons dépliés en alignement et des zones de réception dudit dispositif d'assemblage.

8. Pale d'éolienne selon la revendication 7 **caractérisée en ce que** les tronçons comportant des longerons (21), les moyens de solidarisation des tronçons comportent des trous (31) dans des parties de cornières (30) terminant des longerons (21) des tronçons et des moyens de serrage tels que des boulons (4) de traction.

9. Pale d'éolienne selon la revendication 8 **caractérisée en ce que** des ouvertures d'accès (9) sont ménagées dans la peau de la pale en sorte de disposer les boulons (4) dans les trous (31) des cornières (30) en vis a vis et de serrer les vis et les écrous constituant les boulons pour appliquer les cornières l'une contre l'autre et ainsi solidariser les tronçons.

10. Pale d'éolienne selon la revendication 8 ou 9 **caractérisée en ce que** les longerons (21) se terminent par une zone de section réduite (21 a) recevant les cornières (30).

11. Pale d'éolienne selon la revendication 7 **caractérisée en ce que** les tronçons (1a, 1 b, 1 c) comportant des longerons (21), les moyens de solidarisation comprennent des moyens (6, 25) de fixation des tronçons directement sur les longerons.

12. Pale d'éolienne selon la revendication 11 **caractérisée en ce que** les moyens de fixation des tronçons sont réalisés par des plaques (6) disposées sur des faces externes des longerons et des vis (25) traversant les plaques et les longerons.

13. Pale d'éolienne selon la revendication 12 **caractérisée en ce que** les moyens de fixation des tronçons comportent des inserts taraudés ((34) ou des contre plaques (12) munies de trous taraudés solidaires des longerons pour fixer les plaques (6) au moyen des vis (25).

14. Pale d'éolienne selon la revendication 7 **caractérisée en ce que** la fixation des tronçons entre eux est réalisée par collage.

15. Pale d'éolienne selon la revendication 14 **caractérisée en ce que** les tronçons comportent des longerons (40) dont les faces latérales se terminent par des lames (41a, 41b) adaptées à être prises en sandwich par des premières plaques collées (42a, 42b) pour la reprise des efforts de cisaillements subis par la pale.

16. Pale d'éolienne selon la revendication 14 ou 15 **caractérisée en ce que** les peaux supérieure (23a) et inférieure (23b) des tronçons comportent des ouvertures laissant accessible les terminaison des faces supérieure (43) et inférieure des longerons (40) et **en ce que** des secondes plaques (44) sont collées sur ces terminaisons en sorte de réaliser un capotage et en sorte de reprendre les efforts principaux que subit la pale.

17. Procédé de réalisation de pale d'éolienne **caractérisé en ce qu'**on fabrique des tronçons (1a, 1b, 1c) de pale, on aligne lesdits tronçons longitudinalement dans leur position finale, on les assemble au moyen d'au moins un dispositif d'assemblage selon l'une quelconque des revendications 1 à 4 et 8, on replie les tronçons les uns sur les autres en vue de leur transport, on déplie les tronçons sur le site d'installation de l'éolienne recevant ladite pale, on fixe les tronçons ensembles pour monter la pale et on retire ledit au moins un dispositif d'assemblage.

18. Procédé de réalisation de pale d'éolienne selon la revendication 17 **caractérisé en ce qu'**on fabrique les tronçons dans un même moule.

19. Procédé de réalisation de pale d'éolienne selon la revendication 17 **caractérisé en ce qu'**on fabrique les tronçons dans des moules différents.

## Claims

1. Device for assembling sections of wind turbine blades **characterized in that** it includes at least one removable hinge (2) connecting at least two of said sections and adapted to fold one of said sections on the other for transportation of the blade and to unfold the sections in alignment.

2. Device according to Claim 1 for assembling sections of wind turbine blades wherein the removable hinge (2) includes arms (3a, 3b) for fixing the hinge to said sections disposed on respective opposite sides of a hinge pin (4).

3. Device according to Claim 2 for assembling sections of wind turbine blades **characterized in that** the free ends of the arms (3a, 3b) are terminated by fixing plates (32a, 32b) on the sections.

4. Device according to Claim 2 or 3 for assembling sections of wind turbine blades **characterized in that** it includes holes (10) for passing through the skin of the sections on the side of the blade receiving the hinge fastening means (11) for fixing the arms (3a, 3b) of the removable hinge (2).

5. Device according to Claim 4 for assembling sections of wind turbine blades **characterized in that** it includes inside the blade backing plates (12) for clamping said fixing means (11).

6. Device according to Claim 4 for assembling sections of wind turbine blades **characterized in that** it includes inserts (34) for clamping the fixing means (11) fixed to the inner face of the longitudinal members (21) of the blade.

7. Wind turbine blade including at least two sections adapted to receive an assembly device according to any one of the preceding claims **characterized in that** the sections include means (4, 6, 25, 31, 42a, 42b, 44) for fastening the sections unfolded in alignment and areas receiving said assembly device.

8. Wind turbine blade according to Claim 7 **characterized in that**, the sections including longitudinal members (21), the fixing means of the sections include holes (31) in angle-brackets (30) that terminate the longitudinal members (21) of the sections and clamping means such as tension nut-and-bolt fasteners (4).

9. Wind turbine blade according to Claim 8 **characterized in that** access openings (9) are formed in the skin of the blade for placing the nut-and-bolt fasteners (4) in the holes (31) in the facing angle-brackets (30) and for tightening the nuts and bolts constituting the nut-and-bolt fasteners to press the angle-brackets together and thereby fasten the longitudinal members.

10. Wind turbine blade according to Claim 8 or 9 **characterized in that** the longitudinal members (21) end with a reduced section area (21a) receiving the angle-brackets (30).

11. Wind turbine blade according to Claim 7 **characterized in that**, the sections (1a, 1b, 1c) including longitudinal members (21), the fastening means include means (6, 25) for fixing the sections directly to the longitudinal members.

12. Wind turbine blade according to Claim 11 **characterized in that** fixing means of the sections are formed by plates (6) disposed on external faces of the longitudinal members and nut-and-bolt fasteners (25) passing through the plates and the longitudinal members.

13. Wind turbine blade according to Claim 12 **characterized in that** the fixing means of the sections include threaded inserts (34) or backing plates (12) provided with threaded holes fastened to the longitudinal members to fix the plates (6) by means of nut-and-bolt fasteners (25).

14. Wind turbine blade according to Claim 7 **characterized in that** the sections are fixed together by gluing them together.

15. Wind turbine blade according to Claim 14 **characterized in that** the sections include longitudinal members (40) having lateral faces terminating in blades (41a, 41b) adapted to be sandwiched by first glued plates (42a, 42b) for absorbing shear loads on the blade.

16. Wind turbine blade according to Claim 14 or 15 **characterized in** the upper skins (23a) and the lower skins (23b) of the sections include openings allowing access to the terminations of the upper faces (43) and the lower faces of the longitudinal members (40) and **in that** second plates (44) are glued to these terminations to provide a cap and to absorb the main forces on the blade.

17. Method of making wind turbine blades **characterized in that** sections (1a, 1b, 1c) of the blade are made, said sections are aligned longitudinally in their final position, the sections are assembled by means of least one assembly device according to any one of Claims 1 to 4 and 8, the sections are folded on each other for transportation, the sections are unfolded on the installation site of the wind turbine receiving said blade, the sections are fixed together to mount the blade and said at least assembly device is removed.

18. Method according to Claim 17 of making a wind turbine blade **characterized in that** the sections are made in the same mold.

19. Method according to Claim 17 of making a wind turbine blade **characterized in that** the sections are made in different molds.

## Patentansprüche

1. Vorrichtung zum Zusammenbau von Abschnitten von Blättern von Windkraftanlagen, **dadurch gekennzeichnet, dass** sie mindestens ein entfernbares Scharnier (2) zur Verbindung von mindestens zwei der Abschnitte enthält, das geeignet ist, um einen dieser Abschnitte zum Transport auf den anderen umzuklappen und die Abschnitte fluchtend ausgerichtet auseinander zu klappen.

2. Vorrichtung zum Zusammenbau von Abschnitten von Blättern von Windkraftanlagen nach Anspruch 1, bei der das entfernbare Scharnier (2) Arme (3a, 3b) zur Befestigung des Scharniers auf den Abschnitten enthält, die zu beiden Seiten einer Achse (4) des Scharniers angeordnet sind.

3. Vorrichtung zum Zusammenbau von Abschnitten von Blättern von Windkraftanlagen nach Anspruch 2, **dadurch gekennzeichnet, dass** die freien Enden der Arme (3a, 3b) in Platten (32a, 32b) zur Befestigung an den Abschnitten enden.

4. Vorrichtung zum Zusammenbau von Abschnitten von Blättern von Windkraftanlagen nach Anspruch 2 oder 3, **dadurch gekennzeichnet, dass** sie Durchgangslöcher (10) für Befestigungseinrichtungen (11) aufweist, die die Haut der Abschnitte auf der Seite des Blatts durchqueren, die das Scharnier aufnimmt, um die Arme (3a, 3b) der entfernbaren Scharniere (2) zu befestigen.

5. Vorrichtung zum Zusammenbau von Abschnitten von Blättern von Windkraftanlagen nach Anspruch 4, **dadurch gekennzeichnet, dass** sie im Inneren des Blatts Gegenplatten (12) zum Festklemmen der Befestigungseinrichtungen (11) aufweist.

6. Vorrichtung zum Zusammenbau von Abschnitten von Blättern von Windkraftanlagen nach Anspruch 4, **dadurch gekennzeichnet, dass** sie Einsätze (34) zum Festklemmen der Befestigungseinrichtungen (11) aufweist, die an der Innenseite von Längsträgern (21) des Blatts befestigt werden.

7. Windkraftanlagenblatt, das mindestens zwei Abschnitte enthält, die geeignet sind, um eine Zusammenbauvorrichtung nach einem der vorhergehenden Ansprüche aufzunehmen, **dadurch gekennzeichnet, dass** die Abschnitte Einrichtungen (4, 6, 25, 31, 42a, 42b, 44) zur festen Verbindung der fluchtend ausgerichtet auseinander geklappten Abschnitte und Aufnahmezonen der Zusammenbauvorrichtung aufweisen.

8. Windkraftanlagenblatt nach Anspruch 7, **dadurch gekennzeichnet, dass** bei Längsträger (21) aufweisenden Abschnitten die Einrichtungen zur festen Verbindung der Abschnitte Löcher (31) in Winkeleisenbereichen (30), die Längsträger (21) der Abschnitte abschließen, und Festklemmeinrichtungen wie Zugbolzen (4) aufweisen.

9. Windkraftanlagenblatt nach Anspruch 8, **dadurch gekennzeichnet, dass** Zugangsöffnungen (9) in der Haut des Blatts ausgespart sind, um die Bolzen (4) in den Löchern (31) der einander gegenüberliegenden Winkeleisen (30) anzuordnen und die die Bolzen bildenden Schrauben und Muttern anzuziehen, um die Winkeleisen gegeneinander anzulegen und so die Abschnitte fest miteinander zu verbinden.

10. Windkraftanlagenblatt nach Anspruch 8 oder 9, **dadurch gekennzeichnet, dass** die Längsträger (21) in einer Zone mit verringertem Querschnitt (21a) enden, die die Winkeleisen (30) aufnimmt.

11. Windkraftanlagenblatt nach Anspruch 7, **dadurch gekennzeichnet, dass** bei Längsträger (21) aufweisenden Abschnitten (1a, 1b, 1c) die Einrichtungen zur festen Verbindung Einrichtungen (6, 25) zur Befestigung der Abschnitte direkt an den Längsträgern aufweisen.

12. Windkraftanlagenblatt nach Anspruch 11, **dadurch gekennzeichnet, dass** die Befestigungseinrichtungen der Abschnitte von Platten (6), die auf Außenseiten der Längsträger angeordnet sind, und von die Platten und die Längsträger durchquerenden Schrauben (25) gebildet werden.

13. Windkraftanlagenblatt nach Anspruch 12, **dadurch gekennzeichnet, dass** die Befestigungseinrichtungen der Abschnitte Gewindeeinsätze (34) oder mit Gewindelöchern versehene Gegenplatten (12) aufweisen, die fest mit den Längsträgern verbunden sind, um die Platten (6) mittels der Schrauben (25) zu befestigen.

14. Windkraftanlagenblatt nach Anspruch 7, **dadurch gekennzeichnet, dass** die Befestigung der Abschnitte aneinander durch Kleben erfolgt.

15. Windkraftanlagenblatt nach Anspruch 14, **dadurch gekennzeichnet, dass** die Abschnitte Längsträger (40) aufweisen, deren Seitenflächen in Lamellen (41a, 41b) enden, die geeignet sind, um zwischen ersten geklebten Platten (42a, 42b) eingeklemmt zu werden, um die vom Blatt erfahrenen Scherkräfte aufzunehmen.

16. Windkraftanlagenblatt nach Anspruch 14 oder 15, **dadurch gekennzeichnet, dass** die obere (23a) und untere Haut (23b) der Abschnitte Öffnungen aufweisen, die die Enden der oberen (43) und unteren Seite (40) der Längsträger zugänglich lassen, und dass zweite Platten (44) auf diese Enden geklebt werden, um eine Einkapselung herzustellen und um die vom Blatt erfahrenen Hauptkräfte aufzunehmen.

17. Verfahren zur Herstellung eines Windkraftanlagenblatts, **dadurch gekennzeichnet, dass** Blattabschnitte (1a, 1b, 1c) hergestellt werden, die Abschnitte in Längsrichtung in ihrer Endstellung fluchtend ausgerichtet werden, mittels mindestens einer Zusammenbauvorrichtung nach einem der Ansprüche 1 bis 4 und 8 zusammengebaut werden, die Abschnitte für ihren Transport übereinander geklappt werden, die Abschnitte am Einbauort der das Blatt empfangenden Windkraftanlage auseinander geklappt werden, die Abschnitte aneinander befestigt werden, um das Blatt zu montieren, und die mindestens eine Zusammenbauvorrichtung entfernt wird.

18. Herstellungsverfahren eines Windkraftanlagenblatts nach Anspruch 17, **dadurch gekennzeichnet, dass** die Abschnitte im gleichen Formwerkzeug hergestellt werden.

19. Herstellungsverfahren eines Windkraftanlagenblatts nach Anspruch 17, **dadurch gekennzeichnet, dass** die Abschnitte in unterschiedlichen Formwerkzeugen hergestellt werden.
